# EUROPEAN PATENT APPLICATION

(11) **EP 1 345 417 A1**
(43) Date of publication of application: **17.09.2003**
(21) Application number: 02251824.5
(22) Date of filing: 14.03.2002
(51) Int. Cl.: H04N 5/00

(54) **Method and digital television unit for operating broadcast applications**

(71) Applicant: Sony Service Center (Europe) N.V., 1840 Londerzeel (BE)
(72) Inventor: Fouss, Sebastien, 4000 Liege (BE); Skaringer, Lars, 1050 Bruxelles (BE); Wasowski, Maciek, 3010 Leuven (BE)
(74) Representative: Ayers, Martyn Lewis Stanley

(57) **Abstract**

A method and digital television unit for operating broadcast applications and resident applications together in a digital television unit, the broadcast applications being downloaded from a broadcast stream, wherein a respective instance of a class loader is created for each downloaded broadcast application, each respective instance of the class loader is tagged, for each object of an application, a label is provided identifying the class loader or instance thereof by which the object was loaded and whether an object is part of a broadcast application or a resident application is identified by determining whether or not the class loader or instance thereof identified for said object is tagged or not.

## Description

The present invention relates to a method and digital television unit for operating broadcast applications, in particular for operating broadcast applications and resident applications together in a digital television unit.

Digital television equipment is now well known and various digital television units are available, for instance integrated digital television receivers and set top boxes for use with television displays. There are also various standards, such as DVB, governing broadcast of digital television services.

It has been proposed to provide broadcast applications within the broadcast stream and various standards, such as MHP and MHEG, exist to govern the broadcast of these applications. A broadcast application may be downloaded by a television unit. The broadcast application can then be auto started or activated by a user and run so as to provide from the broadcaster additional services and functionality to the user.

The present invention is based on the recognition that the broadcast applications could be operated in a television unit having its own resident applications and could make use of resources available in the television unit. In other words, by using resident applications, the functionality of the television unit can be created by operating applications which are resident in the television unit. At the most basic level, these applications might merely allow volume, brightness, contrast, etc to be adjusted and provide the user with a graphic display on the television screen. However, the present application is particularly concerned with more sophisticated resident applications, for instance providing an electronic program guide (EPG), a channel index or channel information.

In particular, the present invention is based on a recognition of the problems of broadcast applications having complete access to all of the resources of the digital television unit.

The manufacturer of the digital television unit has no control over the nature of the broadcast applications. Hence, broadcast applications might be created which monopolise certain resources, particularly scarce resources such as a display, or access sensitive parts, for instance those including personal and password details. Hence, it becomes difficult to implement a digital television unit which allows broadcast and resident applications to share the same resources.

According to the present invention, there is provided a method of operating broadcast applications and resident applications together in a digital television unit, the broadcast applications being downloaded from a broadcast stream, the method including:
creating a respective instance of a class loader for each downloaded broadcast application;
tagging each respective instance of the class loader;
for each object of an application, providing a label identifying the class loader or instance thereof by which the object was loaded; and
identifying whether an object is part of a broadcast application or a resident application by determining whether or not the class loader or instance thereof identified for said object is tagged or not.

According to the present invention, there is provided a digital television unit for operating broadcast applications and resident applications together on a common platform, the broadcast applications being downloaded from a broadcast station, the digital television unit including:
a respective instance of a class loader for each broadcast application: and
a processor for tagging each respective instance of the class loader, for providing, for each object of an application, a label identifying the class loader or instance thereof by which the object was loaded and for identifying whether an object is part of a broadcast application or a resident application by determining whether or not the class loader or instance thereof identified for said object is tagged or not.

In this way, at any time, a call by an object of an application can trigger a check on that object. In particular, the object has associated with it a label identifying the class loader or instance thereof by which it was loaded. If the instance of the class loader is tagged as relating to a downloaded broadcast application, the system can take appropriate action. It is thus possible to distinguish between resident and broadcast applications. This allows the system to assign higher priority to the resident applications, provide different access to sensitive parts and resources and provide different behaviour.

By providing a distinction between resident and broadcast applications, it means that a different level of trust, priority and behaviour may be allowed for the broadcast application.

Although specific paths could be used by respective types of application, this would mean that no component or resource could be shared, thereby increasing the amount and complexity of any code.

Preferably the tag includes an application ID for identifying the respective broadcast application.

The tag may also include an organisation ID for identifying the organisation providing the broadcast application in the broadcast stream.

It is known to provide data in the broadcast stream identifying broadcast applications and organisations by ID codes. Hence, these ID codes may be used conveniently to provide the tags for the respective instances of class loader.

Preferably, all objects of resident applications are loaded with a common system class loader, the system class loader not being tagged.

In this way, it is sufficient for the system to determine whether or not a class loader or an instance thereof has a tag. If a tag exists, it can be determined that the related application is a broadcast application.

Preferably, certain resources of the digital television unit may be predefined as sensitive resources and, whenever a sensitive resource is accessed by an object, the object may be identified as being part of a broadcast application or a resident application.

In this way, resident and broadcast applications can both operate in the digital television unit and make use of all of the available resources freely until a predefined sensitive resource is called.

Preferably, when a call object is part of a call stack, each object of the call stack is considered in turn until an object is identified as part of a broadcast application such that the call stack is identified as being part of a broadcast application if an object of the call stack is identified as part of a broadcast application and the call stack is identified as part of a resident application only if no object of the call stack is identified as part of a broadcast application.

In this way, whether or not a stack is part of a broadcast application can be determined.

Preferably, a log of accesses to sensitive resources by broadcast applications is provided.

In this way, the system can keep a record of how any broadcast applications have made use of the resources of the digital television unit. This can be used for any suitable purpose, for instance when determining whether or not resources have been properly exited and closed.

Thus, the log may be used to identify sensitive resources which have been accessed by broadcast applications so as to ensure that the accessed sensitive resources have been closed correctly.

Alternatively or in addition, access to sensitive resources may be denied when the call stack is identified as part of a broadcast application. In this way, certain resources may not be available to broadcast applications, thereby protecting the integrity of the television unit.

The broadcast applications may conform to any known standard for digital receivers. However, they preferably conform to a standard, such as MHP or MHEG.

It will be appreciated that the present invention can be embodied in software and, hence, provided as a computer program or as a computer program product having computer codes stored on a computer readable medium.

The invention will be more clearly understood from the following description, given by way of example only, with reference to the accompanying drawings, in which:
Figure 1 illustrates a television unit in the form of a set top box;
Figure 2 illustrates a television unit in the form of an integrated receiver;
Figure 3 illustrates schematically the basic functionality of the television unit.
Figure 4 illustrates schematically a caller stack accessing a resource;
Figure 5 illustrates a process embodying the present invention; and
Figure 6 illustrates a broadcast application log.

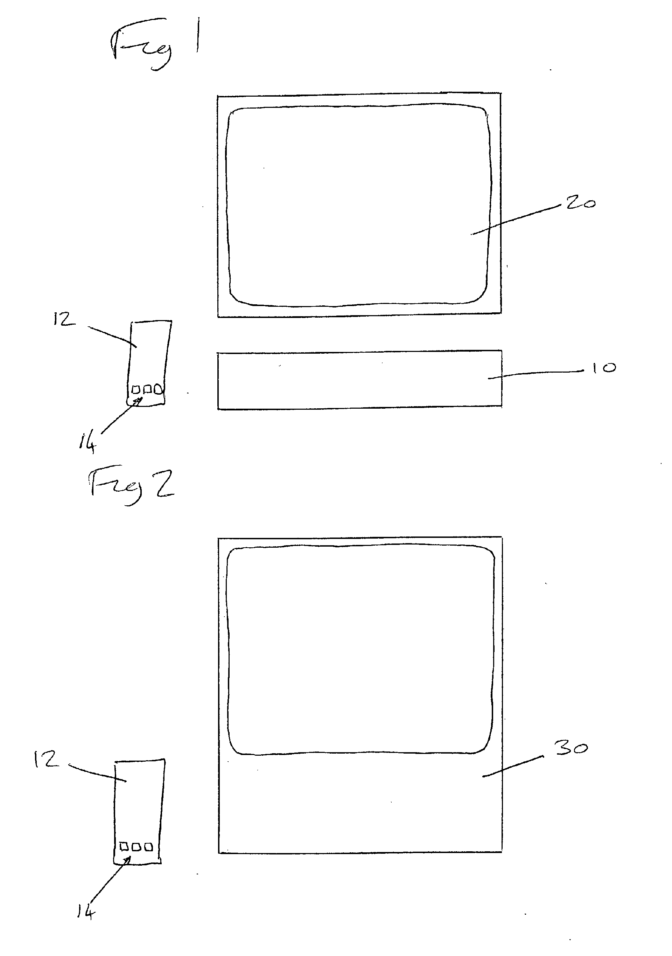

The present application is concerned with digital television units of any type. For instance, as illustrated in Figure 1, the digital television unit may be a set top box 10 in association with a television display 20. Alternatively, as illustrated in Figure 2, the television unit may be an integrated digital receiver 30. In either case, a user input is provided so as to enable the user to control the various functions of the television unit. As illustrated, a remote control 12 is provided with a number of control keys 14.

The television unit 10,30 is able to operate broadcast applications which have been provided in a broadcast stream in accordance with a predetermined standard such as MHP or MHEG. Resident applications are also provided in the television unit by the manufacturer to provide the functionality of the television unit as intended by the manufacturer.

A resident application is an application which is provided by the manufacturer and installed at production time. A typical resident application allows the end-user to change settings of the digital receiver or enables the end-user to tune to another service. In normal mode, a resident application typically runs in background mode without being visible and is activated by a specific set of remote control keys (system keys). Upon receiving a key from this set, it becomes active (resident mode) and may become visible, may hide or resize video, waiting for more end-user input. The concept of resident applications covers all the visible and non-visible applications embedded in the STB/DTV, e.g.: an EPG, a Setup Tool, the process running when TV is in stand-by mode, the clock etc.

A broadcast application is an application being broadcast on a specific (set of) service(s) at a specific time. An example of a broadcast application is an Electronic Program Guide (EPG). Broadcast applications can startup automatically after a channel change. Broadcast applications too can resize the video, rendering (part of the) the background plane visible to the end-user. Broadcast applications are downloaded from the input signal in the same way as video or audio signals.

Both applications have access to a common set of components provided on the STB/DTV (the core stack), e.g.: graphics, tuner, remote control keys, flash memory, disk etc.

These applications could run in Java, but this is not essential. Nevertheless, it should be appreciated that the overall system is software based, preferably taking the form of objects and classes which make use of various resources.

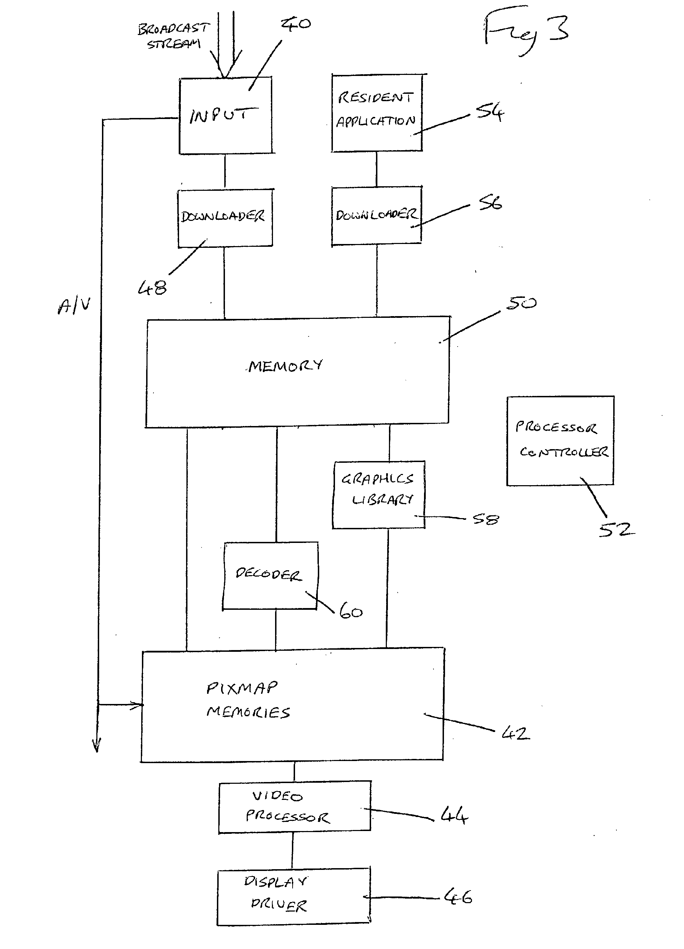

Figure 3 illustrates schematically the functionality of the television unit. The various features of this figure are provided to give an illustration of the functioning of the overall system and are not intended to provide a direct representation of the actual software objects used to operate the system.

A broadcast stream is provided at input 40. This may be derived from any suitable source, such as terrestrial, satellite or cable transmission. The input 40 includes appropriate features, either in software or hardware, for distinguishing various parts of the broadcast stream and separating the data as required. Hence, the audio/video (A/V) of the particular television channel chosen by the user is separated and provided for display. In particular, the video data is written to a pixel map 42. This includes the pixel data for a complete field or frame and is then read out by a video processor 44 and provided to a display driver 46.

Broadcast applications may also be separated in the input 40 and downloaded by a downloader 48 to the television unit. Figure 3 illustrates download as a downloader block 48, though in software terms, an instance of a class loader may be provided for each downloaded broadcast application.

Once downloaded, broadcast applications are stored in the television unit, for instance in a memory 50.

As illustrated in Figure 3, a processor controller 52 is provided. The processor controller 52 controls all of the various parts of the functionality illustrated in Figure 3. In the television unit, there will be various hardware components such as a CPU, but the functionality of the processor controller 52 will usually be implemented in software. The processor controller 52 is responsive to user input, for instance from the remote control 12, to control operation of the television unit.

Thus, the processor controller 52 can cause download of a particular broadcast application according to the input of the user and then operate the television unit in accordance with the downloaded broadcast application.

It is proposed that the internal functionality of the television unit also be achieved in software and, hence, one or more resident applications 54 are also provided. These are stored in memory and loaded 56, for instance with a system class loader, when required.

Broadcast applications are loaded on-demand, by a class loader, from the stream. On the other hand, system applications are loaded on-demand, by a system class loader, from a persistent storage medium (Flash). Thus, a class loader is created when a broadcast application is requested (loaded) and destroyed when the application exits, while the system class loader has the same lifetime as the receiver.

As a consequence, two successive loads of the same broadcast application will not result in a gain of speed; while in case of system application, loaded classes are kept in cache so that a second load of the application, should be a little bit faster.

The control keys 14 may include dedicated keys, activation of which cause operation of the corresponding resident application.

The present application is particularly concerned with the idea of broadcast and resident applications having access to and sharing the same resources. If both types of application are to run on the same platform, there is concern that the uncontrolled broadcast applications should not have the same rights of control over the resources as the resident applications.

It is very important to distinguish between both types of application.

To allow the digital television unit to provide the services intended by the manufacturer, it is important that the resident applications should have a higher priority in terms of using the resources. Also, it may be that only limited access should be given to broadcast applications for sensitive parts of the system, for instance some system components should not be read or written by the broadcast applications. Furthermore, the broadcast and resident applications may require different behaviour, for instance resident applications may automatically descramble a service when tuning whilst the behaviour is on-demand for broadcast applications.

Referring to Figure 3, as discussed above, a broadcast application is downloaded by means of the downloader block 48. In practice, this is implemented in software as a special component, namely a class loader. For each broadcast application that is downloaded, an instance of the class loader is created and the respective instance of the class loader is then responsible for downloading all of the objects (or classes) required to build the broadcast application.

The downloader block 56 for downloading resident applications will be embodied as a system class loader. In this respect, only one system class loader is required for all resident applications.

For broadcast applications conforming to the MHP standard, each broadcast application is identified with a data pair made up of an organisation ID and an application ID. The organisation ID identifies the organisation responsible for broadcasting the particular broadcast application in question. The application ID on the other hand identifies the particular broadcast application from that organisation.

It is thus possible to identify any broadcast application with the appropriate data pair. It is proposed to associate the data pair with the instance of the class loader responsible for downloading the respective broadcast application.

It is also possible to identify the class loader or instance thereof for any object or class. In this way, by reference to the class loader and the application ID, it is possible to determine whether or not the object in question is part of a broadcast application or a resident application.

For standards other than MHP, it is possible to use other identification tags which are available according to the standard. Indeed, even without any ID as provided by the broadcast stream, when an instance of a class loader is created to download a broadcast application, it is possible for the system to provide its own tag.

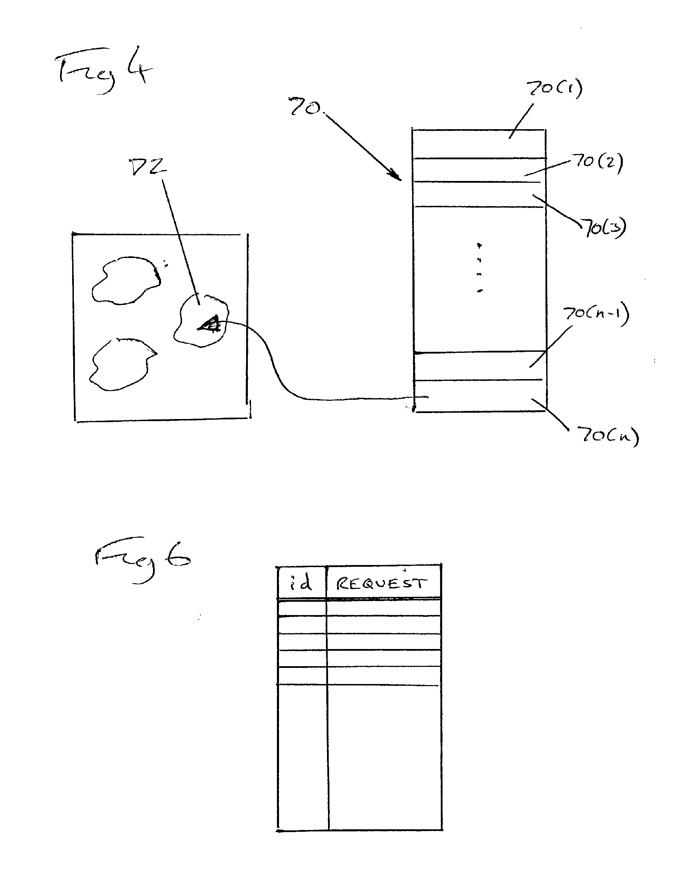

Figure 4 illustrates schematically a caller stack 70 accessing a resource 72 within the digital television unit. The caller stack is made up of a plurality of layers which are built up according to operation of an application, whether broadcast or resident.

Each layer represents a particular object running a particular method and has identified with it a class name identifying the overall object and a method name identifying the process being conducted by that object. For example, an object may concern handling rectangles for display in general, whereas the particular method may relate to drawing a rectangle.

When the operation of the application starts, the first layer 70(1) starts a particular process or function and calls subsequent layers as required. At some point, one of the layers 70(n) as illustrated, may call or access a particular resource 72 of the television unit. At this point, by making use of the present invention, it is possible to identify whether the caller stack relates to a broadcast application or a resident application.

When the resource 72 is called, it is possible to identify or retrieve the caller stack 70. For each layer, it is possible to identify not only the method of that layer, but also the class loader or instance thereof by which the object or class of that layer was loaded. Hence, by referring to the tag or data pair associated with the class loader or instance thereof, it can be determined whether or not a particular layer is associated with a broadcast application or a resident application.

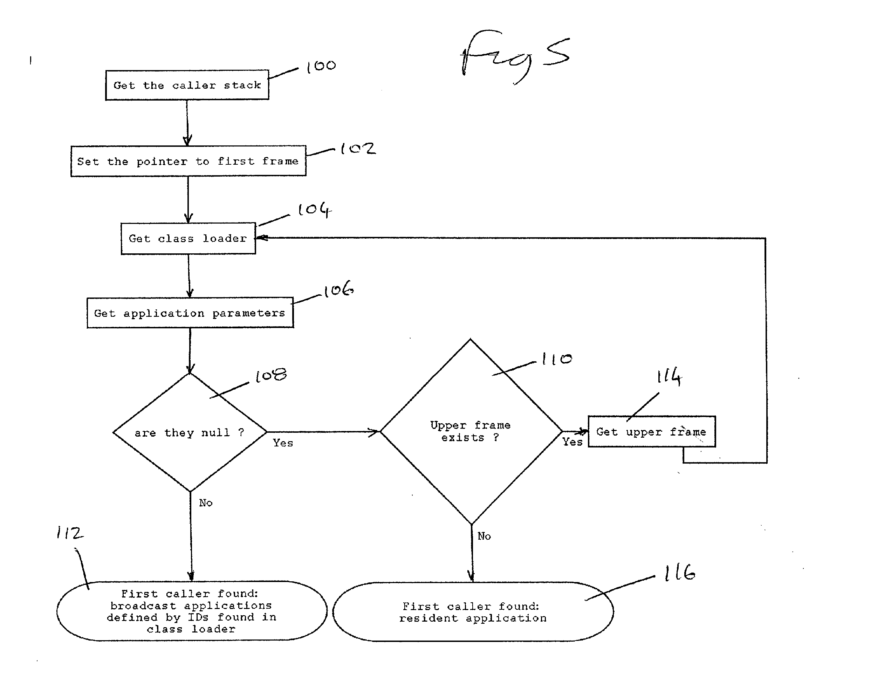

Figure 5 illustrates schematically steps by which the process may continue.

When the resource 72 is accessed or called, in step 100, the caller stack 70 is first identified. In step 102, a pointer is then set to the first frame or layer 70(n) of the stack.

By referring to the label of the frame or layer 70(n) of the stack 70 in step 104, it is possible to identify the class loader or instance thereof by which the object or class of that particular layer was loaded.

In step 106, the application parameters for the identified class loader are determined. In the preferred embodiment described for MHP, the application ID can be obtained. However, it is sufficient merely to determine whether or not a tag as described above exists for the class loader or instance thereof. In step 108, the process identifies whether or not an application ID or tag exists. In particular, it looks for an absence of any tag or ID. If there is an absence of tag or ID then it is determined that the object of the frame or layer in question relates to a resident application and the process moves to step 110. However, if a tag or application ID exists, then it can be concluded that the layer in question does relate to a broadcast application.

If the layer in question does relate to a broadcast application, in step 112, the process can be terminated, since it can be concluded that the stack as a whole relates to a broadcast application. In particular, it is not be noted that the objects of broadcast applications will be able to invoke the objects of resident applications, for instance MHP APIs. However, a resident application cannot know anything about broadcast applications and, therefore, will not be able to invoke objects of broadcast applications. Thus, if an object of a broadcast application is present in the caller stack, it can be concluded that the stack as a whole relates to a broadcast application.

In step 110, the process determines whether or not a layer or frame exists above the layer or frame under consideration. If a further layer or frame exists, then, in step 114, the pointer moves to that frame and the process returns to step 104.

In this way, for the example illustrated in Figure 4 the process consecutively considers layer 70(n), 70(n-1) ... 70(3), 70(2) and 70(1). If the process gets to the top frame or layer 70(1) without having found any class loader tags or application ID's, then, for step 110, the process moves to step 116. At this point, it can be concluded that the caller stack relates to a resident application.

Thus, in summary, for a preferred embodiment using MHP, each class loader is tagged with application parameters, i.e. organisation ID and application ID, whereas the system class loader is not tagged. When a sensitive function is called, i.e. a function given access to a place where it is necessary to distinguish between both types of applications, the caller stack is checked from bottom to top. From the stack layer, the object class loader is retrieved and from this class loader, the application parameters are checked. If such parameters exist, it can be concluded that the first caller is indeed a broadcast application. Furthermore, with the preferred MHP embodiment, the originating broadcast application can also be identified by its ID. If no such parameters exist, the process can loop to the next higher stack and, if the top layer is reached without any application parameter being found, it can be concluded that the first caller in the stack and indeed all layers of the stack relate to resident applications.

Following the process described with reference to Figures 4 and 5, the system could deny access to the resource 72 or allow access, possibly on the basis of some conditional steps. Whether or not to allow access could be dependant on the nature of the resource 72 or any other factors available to the system.

As illustrated in Figure 6, it is possible for the system to maintain a log of requests by broadcast applications. This may be of particular use when access to a resource 72 is granted to the broadcast application.

The log stores an identification of the broadcast application, for instance, the MHP application ID in conjunction with the particular call or request.

As mentioned above, the manufacturer of the digital television unit will have no control over the nature of the broadcast applications which will be downloaded. Therefore, some broadcast applications will access certain resources within the digital television unit without adhering to the desired or required protocols. For example, broadcast applications may reserve particular resources indefinitely and/or not close particular resources correctly.

By means of a log, such as illustrated in Figure 6, it is possible for the system to identify which resources have been used by which broadcast applications and take necessary steps to correct undesirable states in the system.

As will be appreciated, identifying broadcast applications in the manner described above so as to distinguish between resident and broadcast applications has significant advantages over alternatives.

If no distinction is made between resident and broadcast applications, the level of trust, the priority and the behaviour in specific circumstances of the broadcast applications shall be the same as the resident application ones. This will allow broadcast applications access to otherwise confidential information or will allow broadcast application to take possession of resources which are needed by the resident applications to operate the basic functioning of the digital television unit.

If specific paths are used respectively by both types of application, it means that no component can be shared and the amount and complexity of code increases because of duplication.

Broadcast applications have access only to the APIs of the broadcast standard, eg MHP, and therefore, the system could check the layers to detect if a function belonging to the standards APIs has been called. However, this would mean that the resident applications could not use the standard's APIs either. Hence, there would be increased complexity and redundancy. Furthermore, it would not be possible to distinguish between broadcast applications which, according to the present invention, is possible when application IDs are available.

It will be appreciated that the steps described with reference to Figures 4 to 6 are conducted in software. Therefore, with reference to Figure 3, they are embodied by means of suitable code, processes and memories, for instance process controller 52 and memory 50 of Figure 3.

## Claims

1. A method of operating broadcast applications and resident applications together in a digital television unit, the broadcast applications being downloaded from a broadcast stream, the method including:
creating a respective instance of a class loader for each downloaded broadcast application;
tagging each respective instance of the class loader;
for each object of an application, providing a label identifying the class loader or instance thereof by which the object was loaded; and
identifying whether an object is part of a broadcast application or a resident application by determining whether or not the class loader or instance thereof identified for said object is tagged or not.

2. A method according to claim 1 wherein said tag includes an application id for identifying the respective broadcast application.

3. A method according to claim 2 wherein said tag includes an organisation id for identifying the organisation providing the broadcast application in the broadcast stream.

4. A method according to claim 1, 2 or 3 wherein all objects of resident applications are loaded with a common system class loader, the system class loader not being tagged.

5. A method according to any preceding claim further including:
predefining certain resources of the digital television unit as sensitive resources; and
whenever a sensitive resource is called by a call object, identifying whether the identifying object is part of a broadcast application or a resident application.

6. A method according to claim 5 further including:
when a call object is part of a call stack, considering in turn each object of the call stack to which said call object belongs until an object is identified as part of a broadcast application; and
identifying the call stack as part of a broadcast application if an object of the call stack is identified as part of a broadcast application and identifying the call stack as part of a resident application only if no object of the call stack is identified as part of a broadcast application.

7. A method according to claim 6 further including:
providing a log of calls to sensitive resources by broadcast applications.

8. A method according to claim 7 further including:
using the log to identify sensitive resources which have been called by broadcast applications so as to ensure that the called sensitive resources have been closed correctly.

9. A method according to claim 6, 7 or 8 further including:
denying access to said sensitive resource when the call stack is identified as part of a broadcast application.

10. A digital television unit for operating broadcast applications and resident applications together on a common platform, the broadcast applications being downloaded from a broadcast station, the digital television unit including:
a respective instance of a class loader for each broadcast application: and
a processor for tagging each respective instance of the class loader, for providing, for each object of an application, a label identifying the class loader or instance thereof by which the object was loaded and for identifying whether an object is part of a broadcast application or a resident application by determining whether or not the class loader or instance thereof identified for said object is tagged or not.

11. A digital television unit according to claim 10 wherein said tag includes an application ID for identifying the respective broadcast application.

12. A digital television unit according to claim 11 wherein said tag includes an organisation ID for identifying the organisation providing the broadcast application in the broadcast stream.

13. A digital television unit according to claim 10, 11, or 12, further including:
a common system class loader for loading all objects of resident applications, the system class loader not being tagged.

14. A digital television unit according to any one of claims 10 to 13, further including:
resources which have been predefined as sensitive resources; wherein
whenever a sensitive resource is called by a call object, the processor identifies whether the identifying object is part of a broadcast application or a resident application.

15. A digital television unit according to claim 14, wherein:
when a call object is part of a call stack, the processor considers in turn each object of the call stack to which the call object belongs until an object is identified as part of a broadcast application and identifies the call stack as part of a broadcast application if an object of the call stack is identified as part of a broadcast application and identifies the call stack as part of a resident application only if no object of the call stack is identified as part of a broadcast application.

16. A digital television unit according to claim 15, further including:
a log of calls to sensitive resources by broadcast applications, the log being maintained by the processor.

17. A digital television unit according to claim 16, wherein the log identifies sensitive resources which have been called by broadcast applications so as to ensure that the called sensitive resources have been closed correctly.

18. A digital television unit according to claim 15, 16 or 17 wherein the processor denies access to said sensitive resources when the call stack is identified as part of a broadcast application.

19. A digital television unit for operating broadcast applications and resident applications together on a common platform, the broadcast applications being downloaded from a broadcast stream, the unit being configured to operate according to any one of claims 1 to 9.

20. A method according to any one of claims 1 to 9 or a digital television unit according to any one of claims 10 to 19 for use with broadcast applications conforming to at least one of the MHP and MHEG standard.

21. A computer program comprising a program code means for performing all steps of any one of claims 1 to 9 and 20 when said program is run on a computer.

22. A computer program product comprising program code means stored on a computer readable medium for performing the method of any one of claims 1 to 9 and 20 when said program product is run on a computer.
